# EUROPEAN PATENT APPLICATION

(11) **EP 2 685 334 A2**
(43) Date of publication of application: **15.01.2014**
(21) Application number: 13175503.5
(22) Date of filing: 08.07.2013
(51) Int. Cl.: G05B 19/406

(54) **Safety system and control device**

(30) Priority: 11.07.2012 JP 2012155495
(71) Applicant: OMRON CORPORATION, Kyoto-shi, Kyoto 600-8530 (JP)
(72) Inventor: Ueno, Jyunichi, Kyoto 600-8530 (JP); Sato, Toshinori, Kyoto 600-8530 (JP); Morikawa, Akihiko, Kyoto 600-8530 (JP); Ushiyama, Takao, Kyoto 600-8530 (JP)
(74) Representative: Horn Kleimann Waitzhofer

(57) **Abstract**

One aspect of the present invention provides a new safety system (1,1A,1B) that can perform measurement in order to clearly set a realistic determination value and a control device (50,70) constituting the safety system. The safety system, which transfers a target device (5,9) to a safety state when an event matched with a predetermined safety condition is generated, is provided. The safety system includes the control device that includes a monitoring function (22,22A,22B) of continuously collecting information on the safety condition and a management device (10) that aggregates the information on the safety condition, which is collected by the control device. In response to generation of the event matched with the safety condition, the control device stores the information on the safety condition for a predetermined period based on generation timing of the event while correlating the generation timing with the collected information. The management device aggregates the information on the safety condition with the generation timing as a reference.

## Description

### 1. TECHNICAL FIELD

The present invention relates to a safety system that causes a target device to transition to a safety state when an event matched with a predetermined safety condition is generated and a control device constituting the safety system.

### 2. RELATED ART

Machines and facilities, which are used in many production sites, are controlled by Programmable Logic Controllers (hereinafter also referred to as "PLCs"). Generally, in the machines and the facilities, there is a need to enhance an operating rate. Therefore, for example, Japanese Unexamined Patent Publication No. 2004-242480 discloses an inverter device that monitors an output current to be able to early recognize a sign of a breakdown or an abnormality.

In addition to the need to enhance the operating rate, there is a need to ensure safety of the production site. As used herein, the "safety" means that a safety state for a human (a worker) is maintained by a proper safety function even if some sort of risk (a wrong instruction is issued due to a wrong operation, a noise, or a programming mistake) or a breakdown (a function loss due to some sort of component breakdown) is generated. A specific example of the "safety state" means a state in which a power supply and a power source of the machine or the facility are shut off.

There are various methods for implementing the safety function, and frequently there is a demand to make the safety system independent of a system related to actuation of the machine and the facility. According to the independent safety system, not only a device designer who designs the device in consideration to the safety but also persons other than the device designer, such as the worker or a site foreman can easily check validity of the safety function.

Typically, the independent safety system is implemented by a structure that cuts off the power supply and the power source, which are supplied to the target device, when the event matched with the predetermined safety condition is generated. Even if new technologies that provide a high safety function is introduced like an overspeed detection relay that detects overspeed of a motor or a safety scanner that monitors presence of the worker in a monitoring area, only handling that cuts off the power supply and the power source, which are supplied to the target device, is frequently taken as an output mode. Therefore, even if the event matched with the safety condition is generated, it is sufficient to understand ex post facto "when the power supply and the power source are shut off" in associated with the generation of the event.

However, nowadays only the ex-post facto understanding of "when the power supply and the power source are shut off" as described above is occasionally insufficient.

For example, when a safety device that determines whether a value detected with a three-dimensional video sensor is safe or a device such as a multiaxis robot in which action becomes a target of safety management is introduced, it is necessary to check the determination of the safety or a threshold that is of a criterion of the determination in time series and ex-post facto. In order to sufficiently use the safety functions of these devices, it is necessary to understand a whole system image that the power supply and the power source are shut off to ensure the safety because not only "when" but also "how much" "which function" exceeds the threshold (violation of setting value) are detected. In the safety system in which timing or the setting value is improper, the safety system transitions unnecessarily to a safety state (the shutoff of the power supply and the power source). In such cases, there is a need to check ex post facto the state immediately before and immediately after the transition is made to the safety state.

For complicated control such as a robot, IEC (International Electrotechnical Commission) 61508 permits introduction of not a conventional safety countermeasure of the shutoff of the power supply and the power source but a safety countermeasure (a risk countermeasure) in which a monitoring function produced based on a system design technique of restricting a risk is used.

### SUMMARY

For example, once numerical values, such as a time, a position, a speed, and an acceleration, which are related to the determination value of the safety function are determined, it takes a lot of trouble to change or update the numerical values after the device is introduced. This is because it is necessary to discuss the safety of the determination value from the beginning again according to a protocol of IEC, which is time consuming. The present invention has been devised to solve the problems described above, and an object thereof is to provide a new safety system that can perform measurement in order to clearly set the realistic determination value and a control device constituting the safety system.

In accordance with one aspect of the present invention, a safety system that causes a target device to transition to a safety state when an event matched with a predetermined safety condition is generated is provided. The safety system includes: a control device that includes a monitoring function of continuously collecting information on the safety condition; and a management device that aggregates the information on the safety condition, which is collected by the control device, wherein, in response to generation of the event matched with the safety condition, the control device stores the information on the safety condition for a predetermined period based on generation timing of the event while correlating the generation timing with the collected information, and the management device aggregates the information on the safety condition with the generation timing as a reference.

Preferably the monitoring function determines whether the event matched with the safety condition is generated based on a signal related to actuation of the target device, and when the event matched with the safety condition is generated, the monitoring function outputs a signal to stop the actuation of the target device while notifying the management device of the generation of the event matched with the safety condition.

Preferably, when being notified by any one of control devices of the generation of the event matched with the safety condition, the management device issues an instruction to other control devices to stop the actuation of the target device.

Preferably the control device further includes a device control function of controlling the actuation of the target device, and the monitoring function issues the instruction to the device control function to stop the actuation of the target device while determining the generation timing in response to at least one of a determination that the event matched with the safety condition is generated and reception of the instruction to stop the actuation of the target device from the management device.

Preferably the control device includes an interface with a device that controls the actuation of the target device, and the monitoring function issues the instruction to the device that controls the actuation of the target device to stop the actuation of the target device while determining the generation timing in response to at least one of a determination that the event matched with the safety condition is generated and reception of the instruction to stop the actuation of the target device from the management device.

Preferably the safety system further includes an output device that outputs a signal to a device that controls the actuation of the target device, wherein the monitoring function determines the generation timing in response to at least one of a determination that the event matched with the safety condition is generated and reception of the instruction to stop the actuation of the target device from the management device, and the management device outputs the signal through the output device to the device that controls the actuation of the target device in order to stop the actuation of the target device when the event matched with the safety condition is generated.

Preferably the information on the safety condition includes information indicating at least one of states including a normal state and a safety state.

In accordance with another aspect of the present invention, a control device constituting a safety system that causes a target device to transition to a safety state when an event matched with a predetermined safety condition is generated is provided. The control device includes a monitoring function of continuously collecting information on the safety condition, wherein, in response to generation of the event matched with the safety condition, the control device stores the information on the safety condition for a predetermined period based on generation timing of the event while correlating the generation timing with the collected information, and the control device transmits to a management device the stored information on the safety condition such that aggregation can be performed with the generation timing as a reference.

The control device according to one aspect of the present invention can perform the measurement in order to clearly set the realistic determination value.

### BRIEF DESCRIPTION OF THE DRAWINGS

Fig. 1 is a schematic diagram illustrating a configuration of a safety system according to an embodiment;
Fig. 2 is a view illustrating action when a light curtain senses intrusion of a person in the safety system in Fig. 1;
Fig. 3 is a view illustrating action when a safety scanner senses presence of the person in the safety system in Fig. 1;
Fig. 4 is a view illustrating action when a safety monitoring function of a servo driver senses overspeed in the safety system in Fig. 1;
Fig. 5 is a schematic diagram illustrating a configuration of a safety monitoring management device of the safety system in Fig. 1;
Fig. 6 is a schematic diagram illustrating a configuration of a main processing unit of the safety monitoring management device in Fig. 5;
Fig. 7 is a schematic diagram illustrating a configuration of the servo driver of the safety system in Fig. 1;
Fig. 8 is a schematic diagram illustrating a configuration of a personal computer of the safety system in Fig. 1;
Fig. 9 is a block diagram schematically illustrating a control function of the servo driver of the safety system in Fig. 1;
Fig. 10 is a view illustrating a log information collection performed by the safety monitoring function of the servo driver;
Fig. 11 is a block diagram schematically illustrating a control function of the safety monitoring management device of the safety system in Fig. 1;
Fig. 12 is a view illustrating an aggregation result of an aggregation module of the safety monitoring management device;
Fig. 13 is a flowchart illustrating a processing procedure in the servo driver;
Fig. 14 is a flowchart illustrating a processing procedure in the safety monitoring management device;
Fig. 15 is a schematic diagram illustrating a configuration of a safety system according to a first modification of the embodiment; and
Fig. 16 is a schematic diagram illustrating a configuration of a safety system according to a second modification of the embodiment.

### DETAILED DESCRIPTION

An embodiment of the present invention will be described in detail with reference to the drawings. In the drawings, the identical or equivalent component is designated by the identical numeral, and the overlapping description is omitted.

### <A. Outline>

A safety system according to the embodiment causes a target device to transition to a safety state when an event (hereinafter also referred to as a "safety event") matched with a predetermined safety condition is generated. More specifically, the safety system includes a control device that includes a monitoring function of continuously collecting information on the safety condition and a management device that aggregates the information on the safety condition, which is collected by the control device.

More specifically, in the safety system, a state value (such as a speed, a position, and a switch state value) of the target device is recorded (logging) for a predetermined period before and after the target device makes a transition from a normal state (a monitoring state) in which the target device is normally actuated to a safety state. In a servo motor that drives a robot, a safety function, such as an SLS (Safety-Limited Speed) function, which is incorporated in a servo driver, monitors overspeed based on information from a speed sensor attached to the servo motor. In the case that the speed of the servo motor exceeds a predetermined threshold, an electric power supplied to the servo motor is shut off by a shutoff function or an STO (Safety Torque Off) function, and the transition is made to the safety state.

In the embodiment, state data related to the target device is collected and stored for the predetermined period with a signal issuing the instruction to make the transition to the "safety function" as a trigger. This clarifies the reason and/or the timing of making the transition from the normal state to the safety state by the safety function. That is, in response to generation of the event matched with the safety condition, the control device stores the information on the safety condition for a predetermined period based on generation timing while correlating the generation timing with the collected information. The correlation of the generation timing with the collected information typically includes the setting of a reference point in the collected time-series information, and means processing of easily matching the generation timing with information collected by another device.

The management device aggregates the information on the safety condition stored in the control device with the generation timing as a reference. For example, state values are collected from plural control devices based on the identical generation timing, and a graph is displayed on an identical temporal axis while the state values can be compared to one another. The safety function can properly be adjusted using the graph display.

### <B. System configuration (basic configuration)>

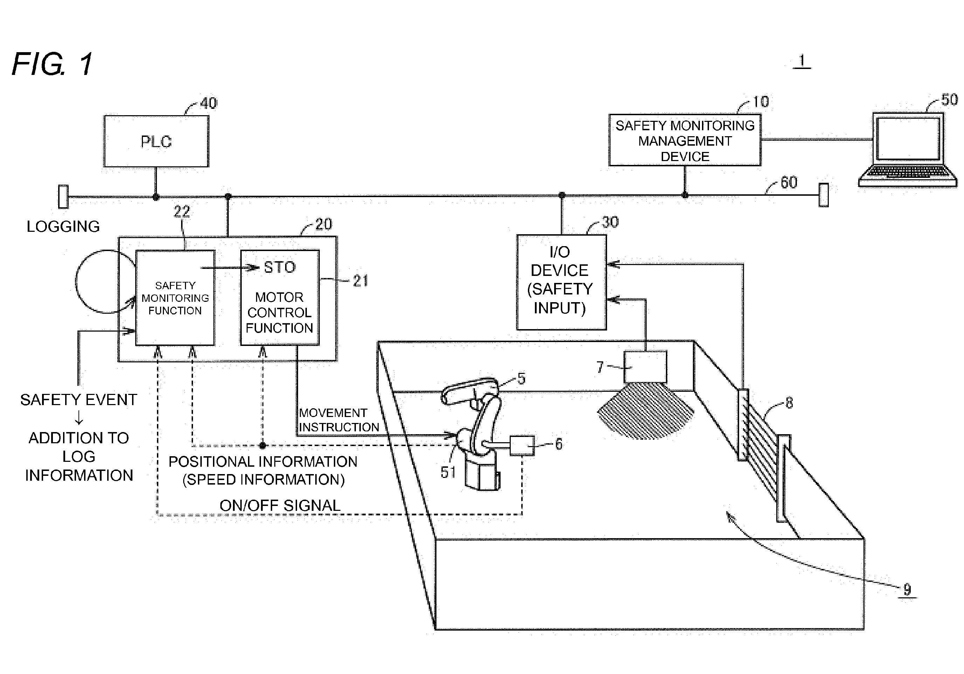

A schematic configuration of a safety system 1 according to the embodiment will be described below. Fig. 1 is a schematic diagram illustrating a configuration of the safety system 1 of the embodiment.

Referring to Fig. 1, the safety system 1 includes a safety monitoring management device 10, a servo driver 20, an I/O (Input and Output) device 30, and a PLC 40. These devices are configured so as to be able to conduct data communication with one another through a network 60. A personal computer 50 is connected to the safety monitoring management device 10. The servo driver 20 is equipped with a motor control function 21 (which may be embodied by a motor controlling device or motor controller) and a safety monitoring function 22 (which may be embodied by a safety monitoring device or safety monitor). A signal input to the I/O device 30 is mainly transmitted to the safety monitoring management device 10.

By way of example, it is assumed that the safety system 1 monitors safety of a monitored facility 9 including an industrial robot 5 that is the target device. An access restricted area is set in the monitored facility 9, and a light curtain 8 is provided at an access port of the access restricted area in order to sense intrusion of a person. It is assumed that a safety scanner 7 is provided near the industrial robot 5 in order to sense the presence of the person.

When the light curtain 8 senses the intrusion of the person as the predetermined safety condition in the safety system 1, or when the light curtain 8 senses the presence of the person as the predetermined safety condition in the safety system 1, the actuation of the industrial robot 5 is stopped.

The industrial robot 5 includes a servo motor 51 that generates a driving force of thereof, and the industrial robot 5 is actuated in response to a movement instruction (typically, a pulse train) from the servo driver 20. An encoder (not illustrated) is incorporated in the servo motor 51, and positional information (or speed information indicating a travel distance per unit time) indicating a position of the servo motor 51, which is detected by the encoder, is fed back to the servo driver 20.

A limit sensor 6 is provided in the industrial robot 5 in order to detect a limit or a restricted position of an actuation range of the industrial robot 5. The limit sensor 6 outputs an ON signal when the industrial robot 5 reaches a predetermined position, and the limit sensor 6 outputs an OFF signal in other cases. The actuation of the industrial robot 5 is stopped when the limit sensor 6 outputs the ON signal as another predetermined safety condition in the safety system 1.

As described above, in the safety system 1, the industrial robot 5 that is the target device is caused to transition to the safety state, when the event matched with such the predetermined safety conditions that the light curtain 8 senses the presence of the person, that the safety scanner 7 senses the presence of the person, and that the limit sensor 6 outputs the ON signal is generated.

The safety system 1 is provided with a safety monitoring function such that the reason the transition is made to the safety state can be verified ex post facto. In the typical example in Fig. 1, the safety monitoring function 22 incorporated in the servo driver 20 continuously collects the information on the safety condition. The motor control function 21 controls the actuation of the industrial robot 5 (the servo motor 51) that is the target device.

More specifically, the safety monitoring function 22 continuously collects (logging) the positional information and/or the speed information from the industrial robot 5 (the servo motor 51) that is the target device in a predetermined period, and the safety monitoring function 22 adds timing of generating the event (the safety event) matched with the safety condition as described above to the collected information (log information) with the safety event generation as a trigger when the safety event is generated. The safety monitoring function 22 records (logging) a state value (the positional information and/or the speed information) of the target device in a predetermined period before and after the safety event is generated. The ON signal and the OFF signal from the limit sensor 6 and the information indicating the state (the normal state and the safety state) are also recorded (logging).

Thus, in response to the generation of the event matched with the safety condition, the safety monitoring function 22 stores the information on the safety condition for a predetermined period based on the generation timing while correlating the generation timing with the collected information.

The safety monitoring management device 10 or the safety monitoring function 22 of the servo driver 20 determines the safety event generation. More specifically, as an example of the signal related to the actuation of the target device, the safety monitoring management device 10 determines whether the event (the safety event) matched with the safety condition is generated based on a detection signal (a safety input), which is received from the light curtain 8 and the safety scanner 7 through the I/O device 30.

The safety monitoring function 22 of the servo driver 20 determines whether the event (the safety event) matched with the safety condition is generated based on the positional information or the speed information from the servo motor 51 and the ON and OFF signals from the limit sensor 6. When the event matched with the safety condition is generated, the safety monitoring function 22 notifies the safety monitoring management device 10 that the event matched with the safety condition is generated, and outputs the signal (the STO) stopping the actuation of the industrial robot 5 (the servo motor 51) that is the target device to the safety monitoring function 22. The STO is a safety function of turning off the output.

On the other hand, when any one of the servo drivers 20 notifies the safety monitoring management device 10 that the event (the safety event) matched with the safety condition is generated, the safety monitoring management device 10 issues an instruction to another control device (not illustrated, may include another servo driver 20) to stop the actuation of the target device.

As described above, in the safety monitoring function 22 of the servo driver 20, there are two cases, namely, the case that the safety monitoring function 22 learns that the event (the safety event) matched with the safety condition is generated by the own determination function and the case that the safety monitoring function 22 receives the instruction from the safety monitoring management device 10 to learn that the event (the safety event) matched with the safety condition is generated. In both the cases, the safety monitoring function 22 outputs the STO to the safety monitoring function 22, and records the safety event generation timing. The safety monitoring function 22 stores information (such as a shaft speed, the position, and the acceleration) on machine action in a predetermined period based on the generation timing. That is, in response to at least one of the own determination that the event matched with the safety condition is generated and the reception of the instruction to stop the actuation of the target device from the safety monitoring management device 10, the safety monitoring function 22 of the servo driver 20 records the safety event generation timing, stores the information (such as the shaft speed, the position, and the acceleration) on the machine action in the predetermined period based on the generation timing, and outputs the instruction to the motor control function 21 to stop the actuation of the target device.

In the example in Fig. 1, although the PLC 40 is illustrated as a part of the safety system 1, preferably the safety system 1 operates independently of the PLC 40. The PLC 40 performs calculation according to a predetermined program, sequentially generates an instruction to actuate the industrial robot 5 in a predetermined behavior, and outputs the instruction to the servo driver 20 in each case. The motor control function 21 of the servo driver 20 generates and outputs the movement instruction to the servo motor 51 in response to the instruction from the PLC 40. On the other hand, when the event (the safety event) matched with the predetermined safety condition is generated, the safety monitoring function 22 of the servo driver 20 outputs the STO to stop the generation and the output of the movement instruction by the motor control function 21 irrespective of the instruction from the PLC 40.

### <C. Action of safety system>

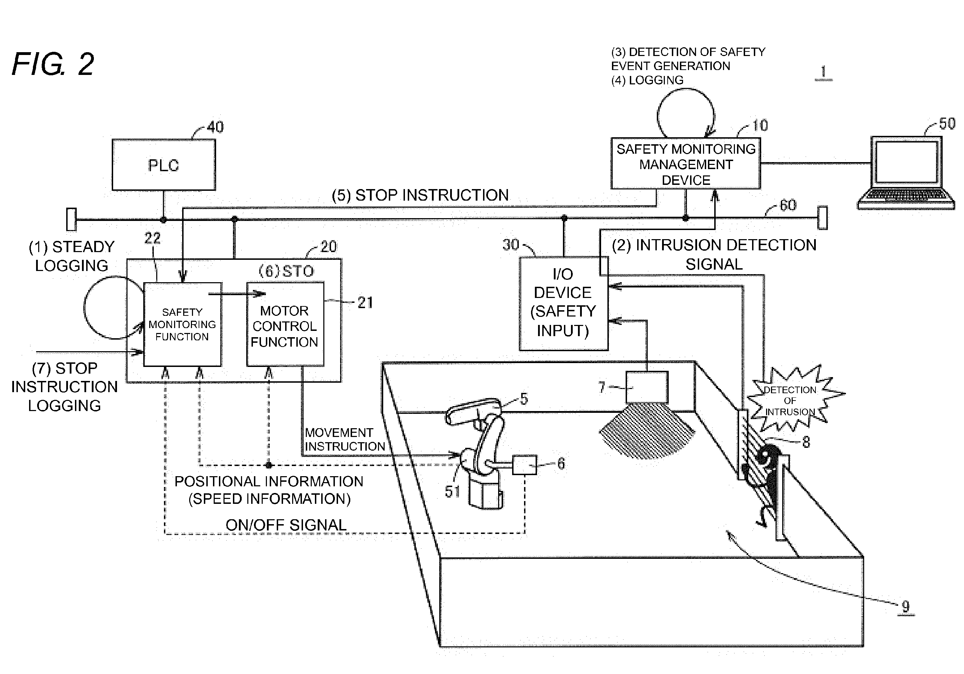

An outline of the action of the safety system 1 in Fig. 1 will be described below with reference to Figs. 2 to 4.

### (c1: Sensing by light curtain 8)

Fig. 2 is a view illustrating the action when the light curtain 8 senses the intrusion of the person in the safety system 1 in Fig. 1. Referring to Fig. 2, in the normal state (the monitoring state), the safety monitoring function 22 of the servo driver 20 records the state value (such as the speed, the position, and a switch state value) of the target device in each predetermined period ((1) steady logging). Because there is an upper limit to the recording area where the state values are temporarily stored, state values for which a given period has lapsed since collecting those state values may sequentially be discarded, similarly as in a FIFO (First-In First-Out) buffer.

When sensing the intrusion of the person, the light curtain 8 transmits a detection signal to the safety monitoring management device 10 through the I/O device 30 ((2) intrusion detection signal). The safety monitoring management device 10 determines whether the intrusion detection signal received from the light curtain 8 through the I/O device 30 is an event matching a predetermined safety condition, and the safety monitoring management device 10 determines that the safety event is generated if the intrusion detection signal is such an event ((3) detection of safety event generation). The safety monitoring management device 10 records the safety event generation timing ((4) logging). In response to the generation of the safety event, the safety monitoring management device 10 issues the instruction to stop the actuation of the target device ((5) stop instruction).

When receiving the instruction to stop the actuation of the target device from the safety monitoring management device 10, the motor control function 21 of the servo driver 20 outputs the signal (the STO) stopping the actuation of the industrial robot 5 (the servo motor 51) to the safety monitoring function 22 ((6) STO). The motor control function 21 of the servo driver 20 determines the generation of the safety event, and stores the state values of the target device for the predetermined period based on the generation timing ((7) stop instruction logging).

When the storage of the state values in the predetermined period is completed, the stored data is automatically transmitted to the safety monitoring management device 10, or the stored data is transmitted to the safety monitoring management device 10 upon request.

### (c2: Sensing by safety scanner 7)

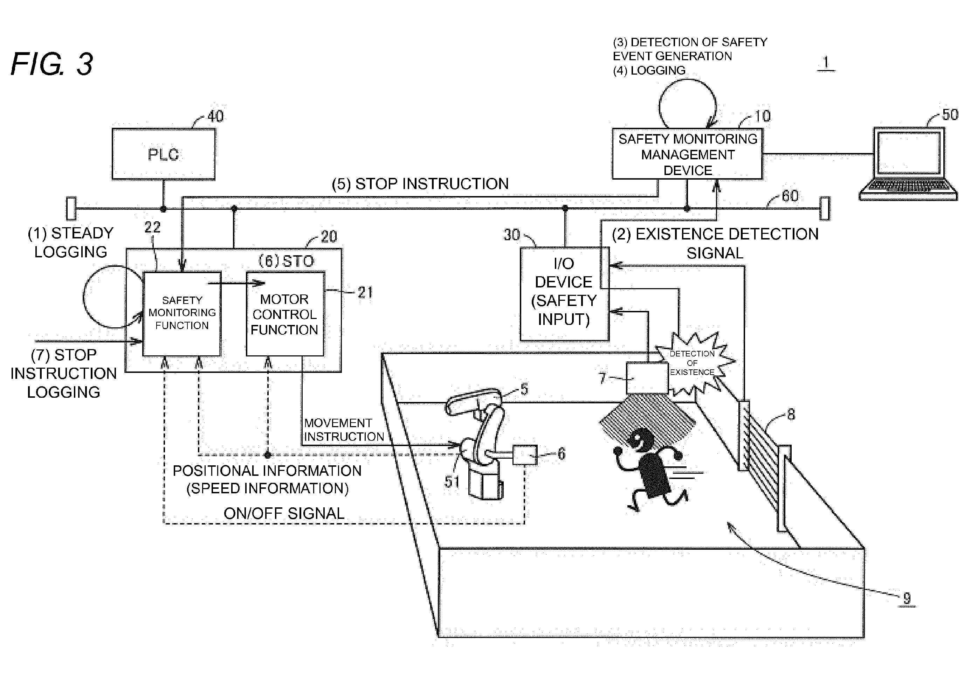

Fig. 3 is a view illustrating the action when the safety scanner 7 senses the presence of the person in the safety system in Fig. 1. The action in Fig. 3 is basically similar to the action in Fig. 2 when the light curtain 8 senses the intrusion of the person.

Specifically, referring to Fig. 3, in the normal state (the monitoring state), the safety monitoring function 22 of the servo driver 20 records the state value (such as the speed, the position, and the switch state value) of the target device in each predetermined period ((1) steady logging).

When sensing the presence of the person, the safety scanner 7 transmits a detection signal to the safety monitoring management device 10 through the I/O device 30 ((2) presence detection signal). The safety monitoring management device 10 determines whether the presence detection signal received from the safety scanner 7 through the I/O device 30 is an event matching a predetermined safety condition, and the safety monitoring management device 10 determines that a safety event is generated if the presence detection signal is such an event ((3) detection of safety event generation). The safety monitoring management device 10 records the safety event generation timing ((4) logging). In response to the generation of the safety event, the safety monitoring management device 10 issues the instruction to stop the actuation of the target device ((5) stop instruction).

When receiving the instruction to stop the actuation of the target device from the safety monitoring management device 10, the motor control function 21 of the servo driver 20 outputs the signal (the STO) stopping the actuation of the industrial robot 5 (the servo motor 51) to the safety monitoring function 22 ((6) STO). The motor control function 21 of the servo driver 20 determines the generation of the safety event, and stores the state value of the target device in the predetermined period based on the generation timing ((7) stop instruction logging).

When the storage of the state value in the predetermined period is completed, the stored data is automatically transmitted to the safety monitoring management device 10, or the stored data is transmitted to the safety monitoring management device 10 upon request.

### (c3: Overspeed sensing by safety monitoring function 22)

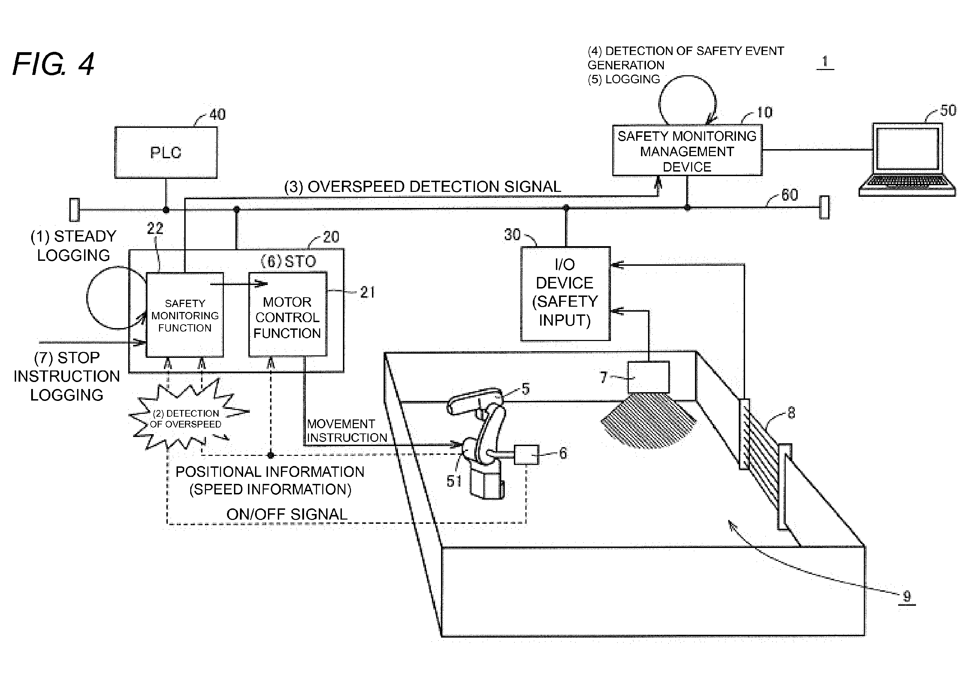

Fig. 4 is a view illustrating the action when the safety monitoring function 22 of the servo driver 20 senses overspeed in the safety system in Fig. 1. The speed information from the servo motor 51 is sequentially compared to a predetermined threshold, and the determination of the overspeed is made by the event that the speed information exceeds the threshold.

Referring to Fig. 4, in the normal state (the monitoring state), the safety monitoring function 22 of the servo driver 20 records the state value (such as the speed, the position, and the switch state value) of the target device in each predetermined period ((1) steady logging).

The determination of the overspeed is made when the speed information from the servo motor 51 exceeds the predetermined threshold ((2) detection of overspeed). The safety monitoring function 22 notifies the safety monitoring management device 10 that the safety event is generated ((3) overspeed detection signal). The safety monitoring management device 10 that receives an overspeed detection signal determines that the safety event is generated ((4) detection of safety event generation), and records the safety event generation timing ((5) logging).

While transmitting the overspeed detection signal, the motor control function 21 of the servo driver 20 outputs the signal (STO) stopping the actuation of the industrial robot 5 (the servo motor 51) to the safety monitoring function 22 ((6) STO). The motor control function 21 of the servo driver 20 determines the generation of the safety event, and stores the state value of the target device in the predetermined period based on the generation timing ((7) stop instruction logging).

When the storage of the state value in the predetermined period is completed, the stored data is automatically transmitted to the safety monitoring management device 10, or the stored data is transmitted to the safety monitoring management device 10 upon request.

### (c4: Summary)

The safety system 1 in Fig. 1 is summarized as follows. The safety system 1 includes the function of automatically keeping the log in timing of the transition from the normal state to the safety state such as action prohibition and action restriction. In the safety system 1 in Fig. 1, the function is incorporated as the safety monitoring function 22 of the servo driver 20. In response to the instruction from the safety monitoring management device 10, the safety monitoring function 22 of the servo driver 20 can perform emergency stop of the industrial robot 5 (the servo motor 51) that is the target device.

When the event matched with the predetermined safety condition is generated, when a violation of safety monitoring is determined, the safety monitoring function 22 of the safety component transitions to the previously-defined safety state (the shutoff state) to ensure the safety, and stores a signal monitor value in the internal memory before and after the predetermined period with the transition to the safety state as the trigger. Because the safety ensuring action is performed in association with the transition to the safety state, the safety monitoring management device 10 and other connected safety components also make the transition to the safety state. The signal monitor value (the state value) in each safety component is stored in the internal memory based on the timing of the transition to the safety state.

The stored pieces of data of the state values are aggregated by the safety monitoring management device 10 and/or the personal computer 50, and times of the pieces of data are set based on the timing of the transition to the safety state (of ensuring the safety), which allows reproduction of the state in which plural safety components operate in cooperation with each other. The validity of the safety function (the threshold) can easily be verified by checking the state values detected by the safety components and a margin to the predetermined threshold.

The retrospective state can be checked by reading the stored data. In the case that the transition to the safety state is made despite the intention of the user such as the worker and the site foreman or the device designer, it is necessary to investigate whether the transition to the safety state satisfies a safety policy. On the other hand, in the embodiment, the pieces of information related to each other are automatically stored, so that the verification of the transition to the safety state and the reset can easily be performed in a short time.

Because the power supply of the PLC 40 that is simultaneously used together with the safety system 1 may not be shut off, control information can also be recorded independently of the action of the safety system 1.

### <D. Device configuration>

Configurations of the devices included in the safety system 1 in Fig. 1 will be described below.

### (d1: Safety monitoring management device)

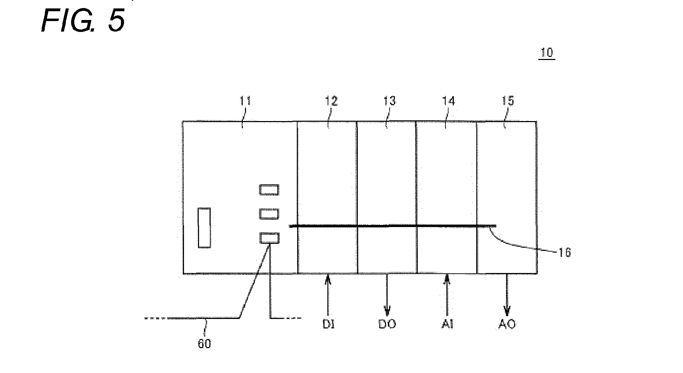

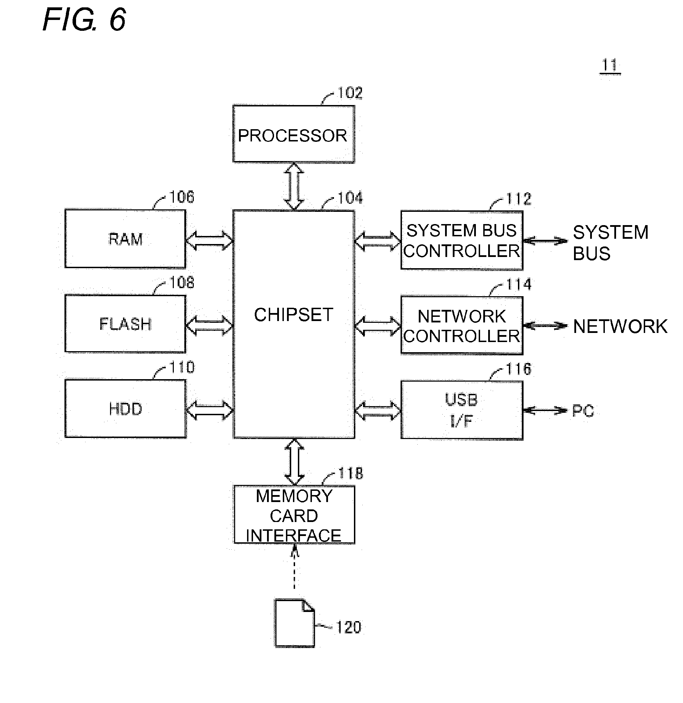

Fig. 5 is a schematic diagram illustrating a configuration of the safety monitoring management device 10 of the safety system 1 in Fig. 1. Fig. 6 is a schematic diagram illustrating a configuration of a main processing unit 11 of the safety monitoring management device 10 in Fig. 5. Typically, an example in which the safety monitoring management device 10 of the embodiment is constructed using the PLC will be described below. Alternatively, the safety monitoring management device 10 may be constructed using a general-purpose architecture processor except the PLC or dedicated hardware.

Referring to Fig. 5, the safety monitoring management device 10 includes a main processing unit 11 and I/O (Input and Output) units 12, 13, 14, and 15. The units are connected to one another so as to be able to conduct data communication with one another through a system bus 16.

The main processing unit 11 is an arithmetic device that controls whole processing of the safety monitoring management device 10. The I/O units 12, 13, 14, and 15 are interfaces, each of which outputs the signal making the transition to the safety state while acquiring state data related to the target device. For example, the I/O unit 12 is a digital input unit that receives the ON and OFF signals (a digital input (DI)). The I/O unit 13 is a digital output unit that outputs the ON and OFF signals (a digital output (DO)) to an external device. The I/O unit 14 is an analog input unit that receives an analog signal (analog input (AI)), converts a signal value of the analog signal into a digit value, and outputs the digit value to the main processing unit 11. The I/O unit 15 is an analog output unit that generates a corresponding analog signal according to an instruction value (the digit value) from the main processing unit 11, and outputs the analog signal to the external device.

All the I/O units 12, 13, 14, and 15 are not necessarily provided, but the number of I/O units and a type of the I/O unit are properly selected according to the target device and the predetermined safety condition. The I/O units 12 and 14 are mainly used to collect the information on the safety condition, and the I/O unit 13 is mainly used to make the transition to the safety state. An I/O unit that receives a signal other than the above signals may be used.

The configuration of the main processing unit 11 of the safety monitoring management device 10 will be described below with reference to Fig. 6. The main processing unit 11 includes a processor 102, a chipset 104, a RAM (Random Access Memory) 106, a flash memory (FLASH) 108, a hard disk (Hard Disk Drive) 110, a system bus controller 112, a network controller 114, a USB interface (I/F) 116, and a memory card interface (I/F) 118.

The processor 102 is a calculation main body that implements the function of the safety monitoring management device 10 by executing the program stored in the flash memory 108. For example, the processor 102 includes a CPU (Central Processing Unit) or a DSP (Digital Signal Processor). The chipset 104 controls the transmission and the reception of the data between the components.

The RAM 106 acts as a working memory, and the RAM 106 retains the data (in the embodiment, the information on the safety condition) collected through the I/O unit and various pieces of data and the program, which are necessary for the processor 102 to execute the program.

Various pieces of data are stored in the flash memory 108 and the hard disk 110 in a nonvolatile manner. More specifically, the program executed by the processor 102 and the information on the safety condition, which is collected with the safety event generation as the trigger, are stored in the recording mediums.

The system bus controller 112 controls data transfer through the system bus 16 (see Fig. 5) that transmits and receives the data to and from the I/O units 12, 13, 14, and 15. The network controller 114 controls the transfer of the data to other devices through the network 60 (see Fig. 1). The USB interface 116 is a communication interface connected to a support device (a personal compute) that performs programming.

A memory card 120 can be attached to the memory card interface 118, and the memory card interface 118 outputs the data stored in the flash memory 108 or the hard disk 110 to the external device thorough the memory card 120.

### (d2: Servo driver)

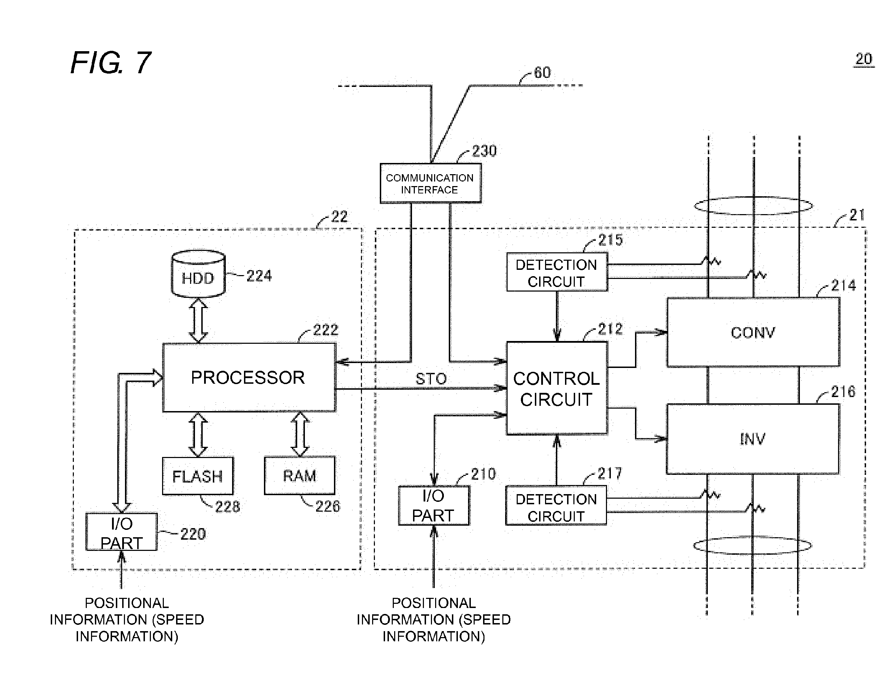

Fig. 7 is a schematic diagram illustrating the configuration of the servo driver 20 of the safety system 1 in Fig. 1. The servo driver 20 of the embodiment is equipped with the motor control function 21 and the safety monitoring function 22. Because preferably the motor control function 21 and the safety monitoring function 22 are independent of each other, the motor control function 21 and the safety monitoring function 22 have hardware configurations independent of each other in the embodiment. Alternatively, the motor control function 21 and the safety monitoring function 22 may have a common hardware configuration.

Referring to Fig. 7, the servo driver 20 includes a control circuit 212, a converter (CONV) 214, an inverter (INV) 216, detection circuits 215 and 217, and an I/O part 210 as the motor control function 21.

The converter 214 converts an external power supply (commercial power supply) into a DC power in response to the instruction from the control circuit 212. The inverter 216 receives the DC power converted by the converter 214, and generates an AC power in response to the instruction from the control circuit 212. The generated AC power is supplied to the servo motor 51.

The detection circuit 215 detects a current value passed through an input side of the converter 214 and a voltage value. The detection circuit 217 detects the current value passed through an output side of the inverter 216 and the voltage value.

In response to the instruction value issued from the PLC 40 through a communication interface (I/F) 230, the control circuit 212 controls the converter 214 and the inverter 216 based on feedback information (the positional information and the speed information, which are fed back from the servo motor 51) collected through the I/O part 210 and the current values and the voltage values, which are detected by the detection circuit 215 and the detection circuit 217.

The servo driver 20 includes an I/O part 220, a processor 222, a hard disk (HDD) 224, a RAM 226, and a flash memory (FLASH) 228 as the safety monitoring function 22.

The processor 222 implements the processing related to the safety monitoring function 22 by executing the program previously stored in the hard disk 224 or the flash memory 228. Various pieces of data are stored in the hard disk 224 and the flash memory 228 in the nonvolatile manner. More specifically, the program executed by the processor 222 and the information on the safety condition, which is collected with the safety event generation as the trigger, are stored in the recording mediums.

The RAM 226 acts as the working memory, and the RAM 226 retains the data (in the embodiment, the information on the safety condition) collected through the I/O part 220 and various pieces of data and the program, which are necessary for the processor 222 to execute the program.

The I/O part 220 collects the positional information and the speed information, which are fed back from the servo motor 51. The I/O part 210 and the I/O part 220 may be mounted as one component. However, preferably the I/O part 210 and the I/O part 220 are separately mounted from the viewpoint of the safety.

### (d3: I/O device)

As to the I/O device 30 of the safety system 1, a network communication unit is disposed instead of the main processing unit 11 in the PLC in Fig. 5. That is, the I/O device 30 is constructed as some type of remote I/O unit (device). Main structural elements of the I/O device 30 are similar to the I/O units 12, 13, 14, and 15 in Fig. 5. For this reason, the detailed description is omitted.

### (d4: PLC)

The configuration of the PLC 40 of the safety system 1 is substantially identical to that of the safety monitoring management device 10 in Figs. 5 and 6. However, the PLC 40 controls the target device irrespective of the processing of the safety monitoring management device 10. On the other hand, when the safety monitoring management device 10 issues the instruction to stop the actuation of the target device, the PLC 40 stops the actuation of the target device.

Because other points are already described with reference to Figs. 5 and 6, the detailed description is omitted.

### (d5: Personal computer)

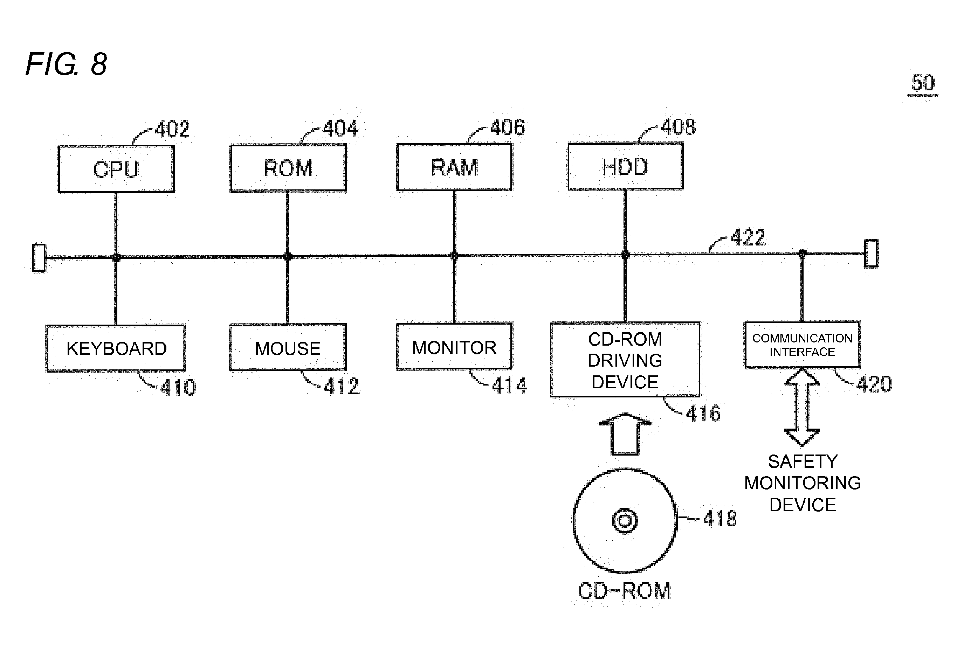

Fig. 8 is a schematic diagram illustrating the configuration of the personal computer 50 of the safety system 1 in Fig. 1. The personal computer 50 of the embodiment includes a CPU 402 that executes various programs including an OS, a ROM 404 in which a BIOS and various pieces of data are stored, a RAM 406 that provides a working area where the data necessary for the CPU 402 to execute the program is stored, and a hard disk (HDD) 408 in which the program executed by the CPU 402 is stored in the nonvolatile manner.

The personal computer 50 includes a keyboard 410 and a mouse 412, which receive a user's operation, and a monitor 414 that presents the information to the user. The personal computer 50 includes a communication interface (I/F) 420 that conducts communication with the safety monitoring management device 10.

Various programs executed by the personal computer 50 are distributed while stored in the recording medium such as a CD-ROM (Compact Disk-Read Only Memory) 418 as described below. The program stored in the CD-ROM 418 is read by a CD-ROM driving device 416 and stored in the hard disk 408. Alternatively, the program may be downloaded from an upper-level host computer through a network.

### <E. Control function>

The control function in the safety system 1 of the embodiment will be described below.

### (e1: Control function of servo driver 20)

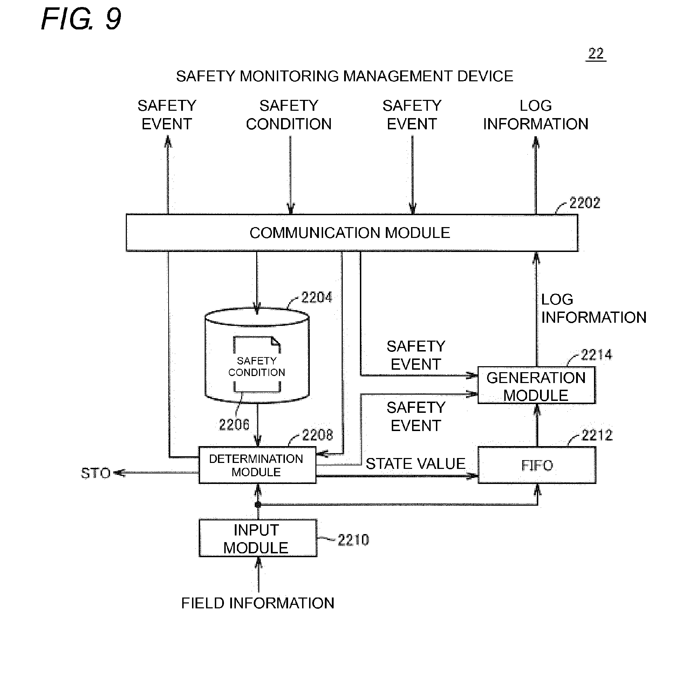

Fig. 9 is a block diagram schematically illustrating the control function of the servo driver 20 of the safety system 1 in Fig. 1. Typically, hardware corresponding to the safety monitoring function 22 in Fig. 7 cooperates with software, thereby constructing each block (module) in Fig. 9.

More specifically, the servo driver 20 includes a communication module 2202, a safety condition storage 2204, a safety condition file 2206, a determination module 2208, an input module 2210, a FIFO buffer 2212, and a generation module 2214 as the control function.

The communication module 2202 transmits and receives various pieces of data to and from the safety monitoring management device 10 connected through the network 60. Specifically, the communication module 2202 receives the safety condition and the generated safety event from the safety monitoring management device 10, and notifies the safety monitoring management device 10 of the generation of the safety event, which is determined by the servo driver 20. The communication module 2202 transmits the collected log information to the safety monitoring management device 10.

The safety condition file 2206 used to determine whether the safety event is generated is stored in the safety condition storage 2204. A set content (the safety condition) of the safety condition file 2206 may be set from the safety monitoring management device 10, or directly be set according to a setting from the user.

The input module 2210 collects the information on the safety condition. The information on the safety condition includes field information from the safety management target device. The field information includes information on the actuation of the target device. Examples of the field information include a feedback speed from the servo motor 51, an instruction speed to the servo motor 51, a servo instruction position to the servo motor 51, a feedback position from the servo motor 51, a status flag indicating the state of the servo motor 51, the state of output port such as a brake, the state of the input signal, and the periodically-updated instruction value from the PLC 40. The pieces of information can arbitrarily be combined.

The field information collected by the input module 2210 is output to the FIFO buffer 2212. In the pieces of field information, the information set as the safety condition is output to the determination module 2208.

The determination module 2208 refers to the safety condition file 2206 to determine whether the event matched with the safety condition is generated based on the signal related to the actuation of the target device. When the event matched with the safety condition is generated, the determination module 2208 notifies the safety monitoring management device 10 that the event (the safety event) matched with the safety condition is generated.

When the event matched with the safety condition is generated, the determination module 2208 outputs the signal (the STO) stopping the actuation of the target device. When the safety monitoring management device 10 notifies the determination module 2208 of the generation of the safety event, the determination module 2208 also outputs the signal (the STO) stopping the actuation of the target device. That is, in response to at least one of the determination that the event matched with the safety condition is generated and the reception of the instruction to stop the actuation of the target device from the safety monitoring management device 10, the determination module 2208 outputs the instruction to the motor control function 21 to stop the actuation of the target device.

The determination module 2208 outputs the state value (for example, during monitoring, during invalidity, and during safety state) indicating which one of the states including the normal state and the safety state at each time point as the information on the safety condition.

The field information collected by the input module 2210 and the state value output from the determination module 2208 are sequentially stored in the FIFO buffer 2212 for a predetermined period. That is, the FIFO buffer 2212 continuously collects the information on the safety condition.

When the safety event is generated, the generation module 2214 extracts the data from the FIFO buffer 2212 for the predetermined period before and after the safety event is generated, and generates log information. That is, in response to the generation of the event matched with the safety condition, the generation module 2214 stores the information on the safety condition for the predetermined period based on the generation timing while correlating the generation timing with the collected information. Here, in response to at least one of the determination that the event matched with the safety condition is generated and the reception of the instruction to stop the actuation of the target device from the safety monitoring management device 10, the generation module 2214 determines the safety event generation timing.

The log information generated by the generation module 2214 is sequentially transmitted to the safety monitoring management device 10, or transmitted to the safety monitoring management device 10 upon request. The generation module 2214 transmits the safety condition, which generates the safety event by comparison with the predetermined threshold, together with the corresponding predetermined threshold (the setting value).

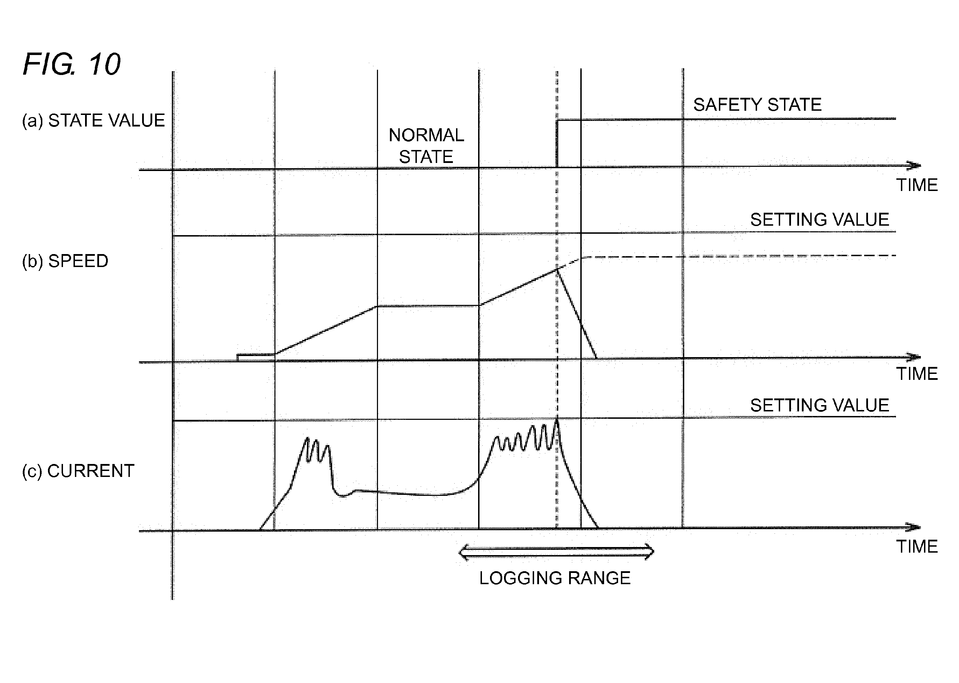

Fig. 10 is a view illustrating the log information collection performed by the safety monitoring function 22 of the servo driver 20. Referring to Fig. 10, by way of example, it is assumed that (a) the state value (the normal state and the safety state) determined by the determination module 2208, (b) the speed of the servo motor 51, (c) the current supplied to the servo motor 51 are collected as the information on the safety condition.

As illustrated in Fig. 10, when the safety event is generated in certain timing to make the transition from the normal state to the safety state, the information is stored as the log information for the predetermined period (a logging range) before and after the timing. As described above, when the safety event is generated, the past field information from the time point is also logged by sequentially collecting the field information using the FIFO buffer as described above.

Because the safety monitoring management device 10 aggregates the pieces of log information, preferably temporal axes of the pieces of log information are commonalized. For example, the temporal axes in Fig. 10 may be defined using a timer (or a counter) used to ensure punctuality in the network 60. The definition of the temporal axis can check ex post facto the temporal behavior of each component even if the pieces of log information are aggregated together with various pieces of information collected on the side of the safety monitoring management device 10

The times may be adjusted by another method. For example, the safety monitoring management device 10 may periodically notify the safety monitoring function 22 of a clock time, or each device is equipped with a GPS (Global Positioning Sensor) receiver and clock time information included in a GPS radio wave may be used.

### (e2: Control function of safety monitoring management device 10)

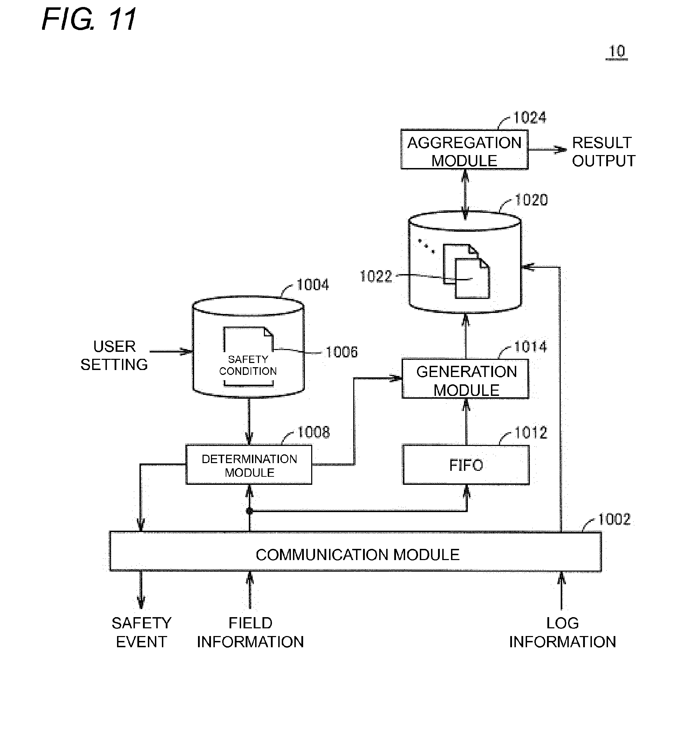

Fig. 11 is a block diagram schematically illustrating the control function of the safety monitoring management device 10 of the safety system 1 in Fig. 1. Typically, the hardware constituting the safety monitoring management device 10 in Fig. 5 cooperates with the software, thereby constructing each block (module) in Fig. 11.

More specifically, the safety monitoring management device 10 includes a communication module 1002, a safety condition storage 1004, a safety condition file 1006, a determination module 1008, a FIFO buffer 1012, a generation module 1014, a log information storage 1020, and an aggregation module 1024 as the control function.

The communication module 1002 transmits and receives various pieces of data to and from the servo driver 20, the I/O device 30, and the PLC 40, which are connected through the network 60. Specifically, the communication module 1002 receives the safety event issued by the servo driver 20 and/or the information (the field information) on the safety condition, which is collected by the I/O device 30, and notifies the servo driver 20 (and another servo driver (not illustrated)) and the I/O device 30 of the safety event generation determined by the determination module 1008. The communication module 1002 receives the log information collected by the servo driver 20.

The safety condition file 1006 used to determine whether the safety event is generated is stored in the safety condition storage 1004. The set content (the safety condition) of the safety condition file 1006 may directly be set according to the setting from the user typically. The set content of the safety condition file 1006 of the safety monitoring management device 10 and the set content of the safety condition file 2206 of the servo driver 20 may independently be set, or only the content related to the servo driver 20 in the safety condition file 1006 may be used as the safety condition file 2206.

The determination module 1008 refers to the safety condition file 1006 to determine whether the event matched with the safety condition is generated based on the signal related to the actuation of the target device. When the event matched with the safety condition is generated, the determination module 1008 notifies the servo driver 20 (and another servo driver (not illustrated)) and the I/O device 30 that the event (the safety event) matched with the safety condition is generated.

When any one of the servo driver 20 notifies the determination module 1008 that the event (the safety event) matched with the safety condition is generated, the determination module 1008 notifies another servo driver 20 and another I/O device 30 that the event matched with the safety condition is generated. That is, when any one of the servo drivers 20 notifies the determination module 1008 that the event matched with the safety condition is generated, the determination module 1008 issues the instruction to another servo driver 20 and/or another I/O device 30 to stop the actuation of the target device.

The determination module 1008 outputs the state value (for example, during monitoring, during invalidity, and during safety state) indicating which one of the states including the normal state and the safety state at each time point as the information on the safety condition.

The field information collected through the communication module 1002 and the state value output from the determination module 1008 are sequentially stored in the FIFO buffer 1012 for the predetermined period. That is, the FIFO buffer 1012 continuously collects the information on the safety condition. The field information includes the information on the actuation of the target device. Examples of the field information include the output value and/or the input value and the state value at each time point of the target device connected to the I/O device 30. The pieces of information can arbitrarily be combined.

When the safety event is generated, the generation module 1014 extracts the data from the FIFO buffer 1012 for the predetermined period before and after the safety event is generated, and generates the log information. That is, in response to the generation of the event matched with the safety condition, the generation module 1014 stores the information on the safety condition for the predetermined period based on the generation timing while correlating the generation timing with the collected information. Here, in response to at least one of the determination that the event matched with the safety condition is generated and the reception of the instruction to stop the actuation of the target device from the servo driver 20, the generation module 1014 determines the safety event generation timing.

The log information generated by the generation module 1014 and the log information acquired from the servo driver 20 through the communication module 1002 are stored in the log information storage 1020. In the system including the plural servo drivers 20, the plural pieces of log information are correlated with the identical safety event. That is, sometimes the plural pieces of log information 1022 are stored in the log information storage 1020 in response to the generation of the identical safety event. For the safety condition, which generates the safety event by comparison with the predetermined threshold, the predetermined threshold (the setting value) is stored in the generation module 1014 together with the log information.

The aggregation module 1024 aggregates the log information 1022 stored in the log information storage 1020 while correlating the log information 1022 with the safety event generation timing. That is, the aggregation module 1024 aggregates the information on the safety condition based on the safety event generation timing. The aggregation module 1024 outputs a result that is obtained by aggregating the information on the safety condition. Typically, the result output is displayed on the personal computer 50 connected to the safety monitoring management device 10. Alternatively, any mode such as a printer output, e-mail transmission, and an access based on the Web may be used.

The personal computer 50 may execute the program to implement the function related to the aggregation module 1024 of the safety monitoring management device 10. In this case, it is not necessary to incorporate the aggregation module 1024 in the safety monitoring management device 10, but only the function of collecting the log information 1022 is incorporated in the safety monitoring management device 10.

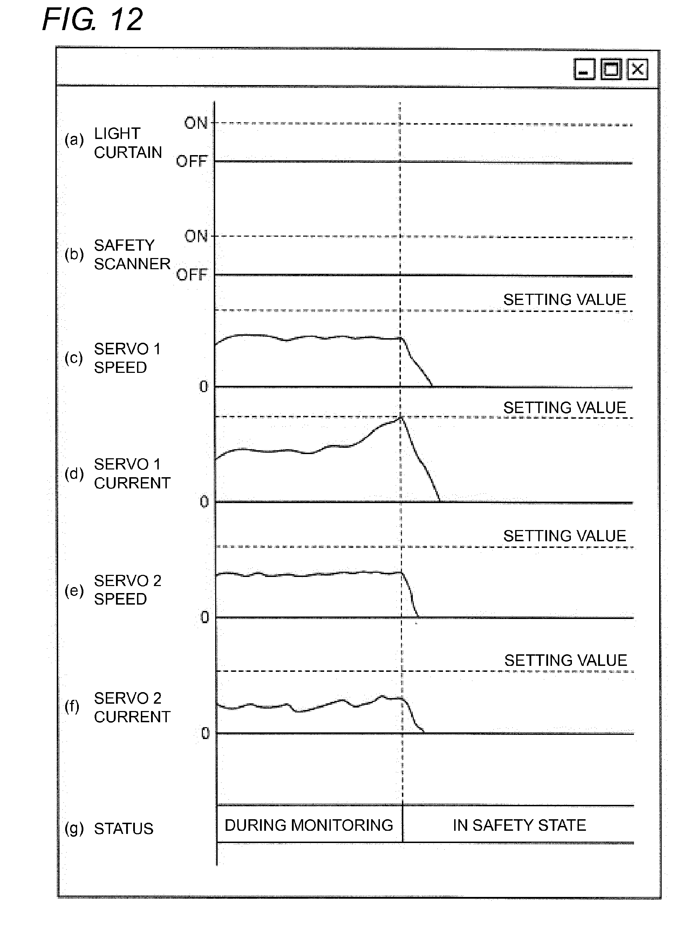

Fig. 12 is a view illustrating an aggregation result of the aggregation module 1024 of the safety monitoring management device 10. Fig. 12 illustrates a screen example displayed on a screen of the personal computer 50.

By way of example, it is assumed that two servo drivers 20 control the servo motors 1 and 2 while the safety monitoring management device 10 collects the ON and OFF signals from the light curtain 8 and the safety scanner 7 through the I/O device 30. It is assumed that each of the two servo drivers 20 collects the pieces of log information on the safety condition of the corresponding servo motor.

As illustrated in Fig. 12, time changes of the pieces of information are displayed, and the temporal axis is determined based on the generation timing of the event (the safety event) matched with the safety condition. In the screen examples in Fig. 12, (a) light curtain 8 and (b) safety scanner 7 indicate the log information collected by the safety monitoring management device 10, (c) speed of servo motor 1 (speed of servo 1) and (d) current value of servo motor 1 (current value of servo 1) indicate the log information collected by the first servo driver 20, and (e) speed of servo motor 2 (speed of servo 2) and (f) current value of servo motor 2 (current value of servo 2) indicate the log information collected by the second servo driver 20. (f) status indicates the state value such as "during monitoring" and "safety state value". The state value managed by the safety monitoring management device 10 or the state value managed by the servo driver 20 is used as the status.

Each of the speed and the current value is displayed together with the corresponding threshold (the setting value). As described above, the servo driver 20 transmits the threshold (the setting value) while correlating the threshold with the log information. The margin up to exceedance of the threshold (the violation of the setting value) can be checked at a glance by displaying each of the speed and the current value together with the threshold (the setting value).

In the case that the plural thresholds (the setting values) are set, any one of the safety functions may explicitly indicate whether the safety event is generated by the comparison of the each threshold and the field information. In this case, the status is collected and stored in each safety function.

### <F. Processing procedure>

A processing procedure in the safety system 1 of the embodiment will be described below.

### (f1: Processing procedure of servo driver 20)

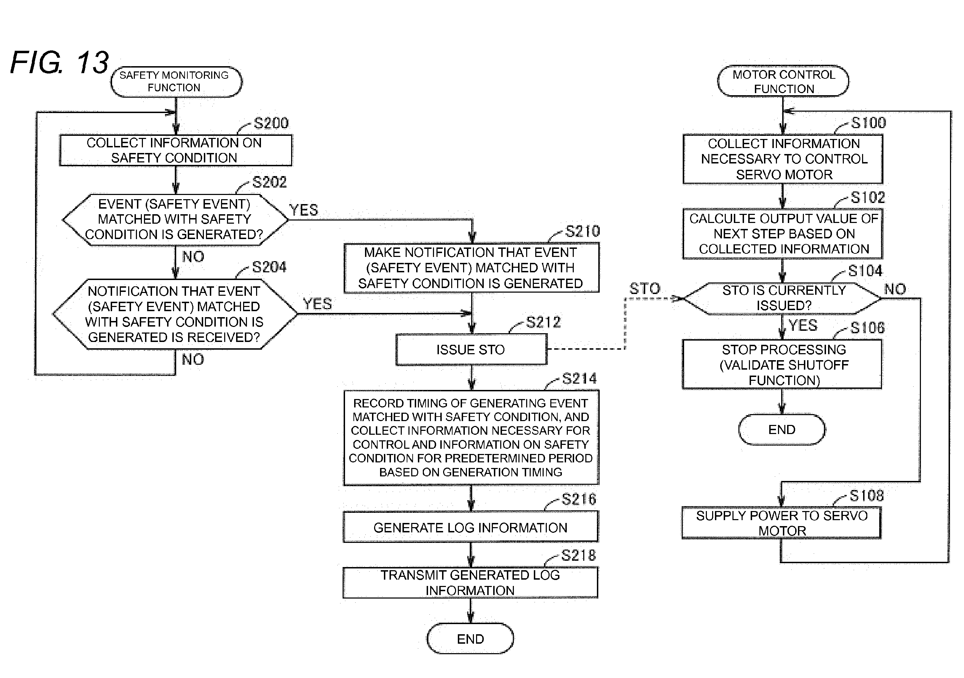

Fig. 13 is a flowchart illustrating the processing procedure of the servo driver 20. The processing procedures of the motor control function 21 and the safety monitoring function 22 are illustrated in the flowchart in Fig. 13.

Referring to Fig. 13, the control circuit 212 of the servo driver 20 collects the information necessary for the control of the servo motor 51 (Step S100). Specifically, the control circuit 212 collects the instruction value from the PLC 40, the current value and the voltage value on the input side of the converter 214, which is detected by the detection circuit 215, the current value and the voltage value on the output side of the inverter 216, which is detected by the detection circuit 217, and the signal (the speed information and the positional information) fed back from the servo motor 51. The information necessary for the control of the servo motor 51 is sequentially recorded. The control circuit 212 calculates the output value for the next step based on the information collected in Step S100 (Step S102). The control circuit 212 determines whether the processor 222 issues the STO (Step S104). When the processor 222 issues the STO, the processing is stopped (Step S106). That is, the control circuit 212 validates the shutoff function of shutting off the power supplied to the servo motor 51. On the other hand, when the processor 222 does not issue the STO, the control circuit 212 supplies the power to the servo motor 51 (Step S108). More specifically, the control circuit 212 controls the converter 214 and the inverter 216 according to the output value calculated in Step S102.

For the sake of convenience, Fig. 13 illustrates the example in which the presence or non-presence of the STO issue is determined in a specific step during the processing. However, typically the STO is frequently incorporated as an interrupt signal. In this case, the shutoff function is validated in any stage of the processing.

The following processing of the safety monitoring function 22 is performed in parallel with the motor control function 21.

The processor 222 collects the information on the safety condition, and stores the information on the safety condition in the RAM 226 (the FIFO buffer 2212) (Step S200). The information on the safety condition is sequentially recorded. The processor 222 refers to the previously-stored safety condition file 2206, and determines whether the event (the safety event) matched with the safety condition is generated based on the collected information on the safety condition (Step S202).

When the event matched with the safety condition is not generated (NO in Step S202), the processor 222 determines whether the processor 222 receives the notification that the event matched with the safety condition is generated from the safety monitoring management device 10 (Step S204). When the processor 222 does not receive the notification that the event matched with the safety condition is generated from the safety monitoring management device 10 (NO in Step S204), the pieces of processing from Step S200 are repeated.

On the other hand, when the event matched with the safety condition is generated (YES in Step S202), the processor 222 notifies the safety monitoring management device 10 that the event matched with the safety condition is generated (Step S210). The processor 222 issues the STO (Step S212). The processor 222 records the timing of generating the event matched with the safety condition, and collects the information (such as the shaft speed, the position, and the acceleration) necessary for the control of the servo motor 51 and the information on the safety condition for the predetermined period based on the generation timing (Step S214). The processor 222 generates the log information when completing the collection of the information necessary for the control of the servo motor 51 and the information on the safety condition for the predetermined period (Step S216). Finally the processor 222 transmits the generated log information to the safety monitoring management device 10 (Step S218). Then the processing is ended.

When the processor 222 receives the notification that the event matched with the safety condition is generated from the safety monitoring management device 10 (YES in Step S204), the pieces of processing from Step S212 are repeated

### (f2: Processing procedure of safety monitoring management device 10)

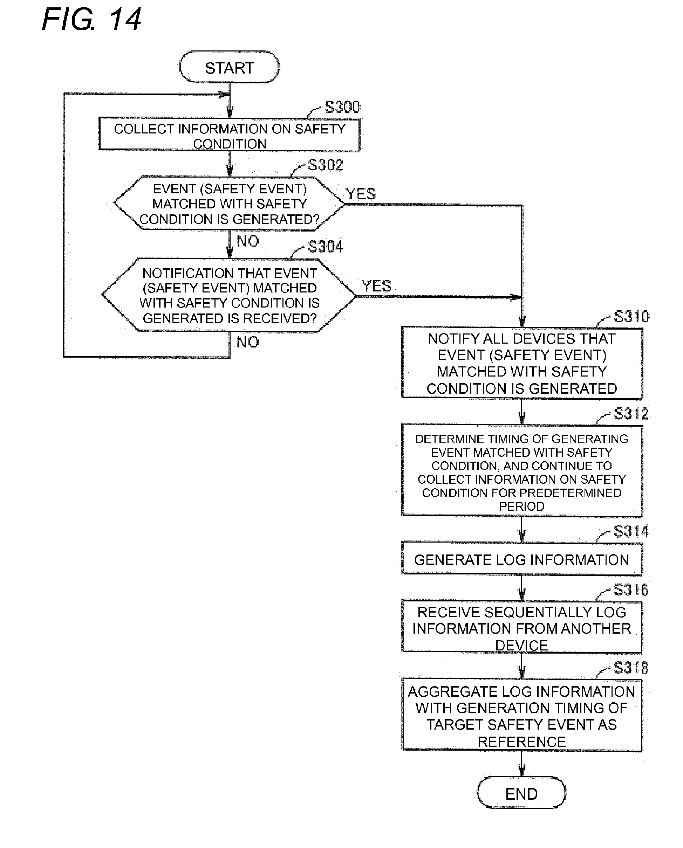

Fig. 14 is a flowchart illustrating the processing procedure of the safety monitoring management device 10. Referring to Fig. 14, the processor 102 collects the information on the safety condition, and stores the information on the safety condition in the RAM 106 (the FIFO buffer 1012) (Step S300). The processor 102 refers to the previously-stored safety condition file 1006, and determines whether the event (the safety event) matched with the safety condition is generated based on the collected information on the safety condition (Step S302).

When the event matched with the safety condition is not generated (NO in Step S302), the processor 102 determines whether the processor 102 receives the notification that the event matched with the safety condition is generated from another device (any one of the servo drivers 20) (Step S304). When the processor 102 does not receive the notification that the event matched with the safety condition is generated from another device (NO in Step S304), the pieces of processing from Step S300 are repeated.

On the other hand, when the event matched with the safety condition is generated (YES in Step S302) or when the processor 102 receives the notification that the event matched with the safety condition is generated from another device (YES in Step S304), the processor 102 notifies all the devices (the servo driver 20 and/or the I/O device 30) that the event matched with the safety condition is generated (Step S310). That is, the processor 102 issues the instruction to all the control devices constituting the safety system 1 to stop the actuation of the target device.

The processor 102 determines the timing of generating the event matched with the safety condition, and continues to collect the information on the safety condition for the predetermined period (Step S312). The processor 102 generates the log information when completing the collection of the information on the safety condition for the predetermined period (Step S314).

The processor 102 sequentially receives the log information transmitted from another device (Step S316), and the processor 102 aggregates the log information based on the safety event generation timing of the target device (Step S318). Then the processing is ended.

The aggregated log information is properly output upon request of the personal computer 70.

### <G System configuration (first modification)>

In the configuration of the embodiment, by way of example, the safety monitoring function 22 that is of the safety component is incorporated in the servo driver 20. Alternatively, another configuration may be used instead of the configuration in which the safety monitoring function 22 is incorporated. A configuration in which the motor control function 21 and the safety monitoring function 22 are implemented by devices independent of each other will be described below as a modification of the safety system 1.

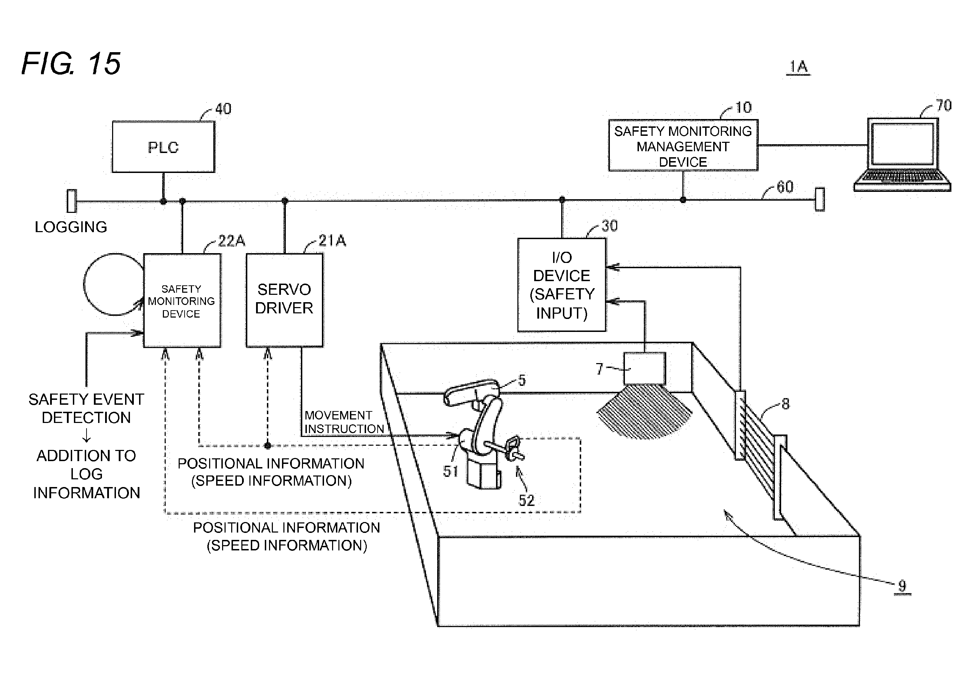

Fig. 15 is a schematic diagram illustrating a configuration of a safety system 1A according to a first modification of the embodiment. The safety system 1A in Fig. 15 differs from the safety system 1 in Fig. 1 in that the servo driver 20 is incorporated as a servo driver 21A that provides the motor control function 21 and a safety monitoring device 22A that provides the safety monitoring function 22.

Because the servo driver 21Aand the safety monitoring device 22A in Fig. 15 perform the control of the motor control function 21 and the safety monitoring function 22 respectively, the detailed description is omitted. However, the safety monitoring device 22A transmits the STO to the servo driver 21A through the network 60 or directly-connected wiring.

The safety monitoring device 22A includes an interface with the servo driver 21A that controls the actuation of the servo motor 51 of the target device. In response to at least one of the determination that the event (the safety event) matched with the safety condition is generated and the reception of the instruction to stop the actuation of the target device from the safety monitoring management device 10, the safety monitoring device 22A that provides the safety monitoring function 22 determines the safety event generation timing, and outputs the instruction to the servo driver 21A to stop the actuation of the target device.

### <H. System configuration (second modification)>

As described above, sometimes there is the demand for the safety system that is independent of the control system related to the actuation of the machine or the facility. For example, the safety monitoring management device 10 and the PLC 40 are connected to the networks independent of each other. Even in such cases, the functions of the embodiment can be implemented.

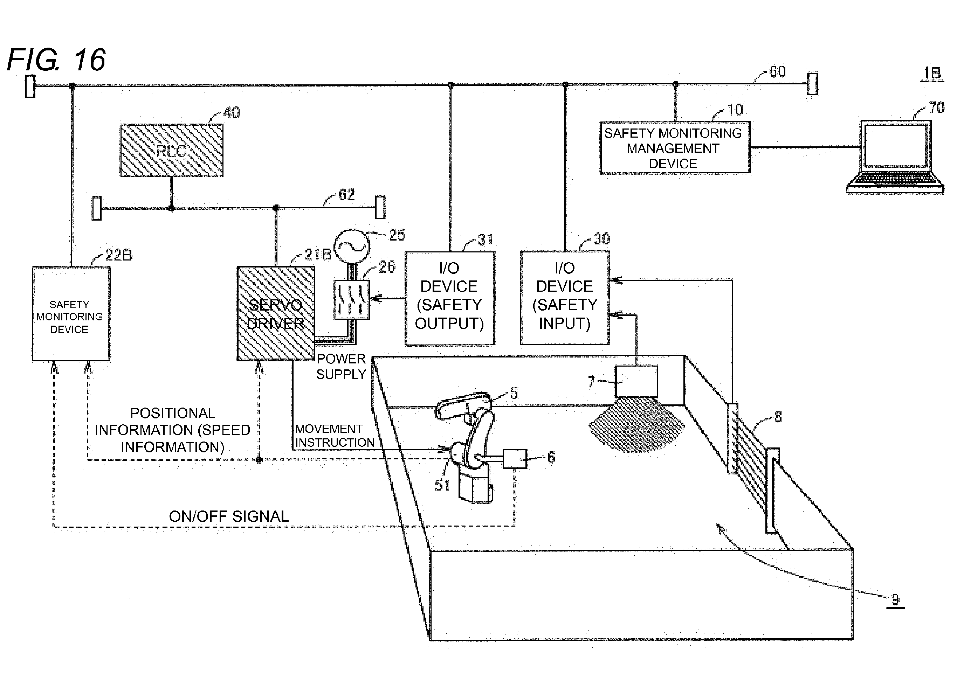

Fig. 16 is a schematic diagram illustrating a configuration of a safety system 1B according to a second modification of the embodiment. The safety system 1B in Fig. 16 differs from the safety system 1 in Fig. 1 in that the servo driver 20 is incorporated as a servo driver 21B that provides the motor control function 21 and a safety monitoring device 22B that provides the safety monitoring function 22. Additionally, the network 60 to which the safety monitoring management device 10 and the safety monitoring device 22B are connected is independent of a network 62 to which the PLC 40 and the servo driver 21B are connected. For this reason, the device configuration that controls the actuation of the industrial robot 5 (servo motor 51) of the target device does not interfere with the device configuration that monitors the industrial robot 5.

In the safety system 1B in Fig. 16, the configuration that shuts off the power supply to the servo driver 21B is used as the configuration that stops the actuation of the servo driver 21B and the industrial robot 5 (the servo motor 51) in the case that the safety system (the PLC 40 and the servo driver 21B) senses the generation of some sort of safety event. More specifically, a contactor 26 is provided on a route of the power supplied from the power supply 25 to the servo driver 21B, and an I/O device 31 outputs the shutoff signal to the contactor 26, thereby implementing the shutoff of the power supply during the abnormality. The I/O device 31 is connected to the network 60 like the safety monitoring management device 10.

The safety system 1B includes the I/O device 31, which outputs the signal to the servo driver 21B that controls the actuation of the servo motor 51 of the target device. In response to at least one of the determination that the event (the safety event) matched with the safety condition is generated and the reception of the instruction to stop the actuation of the target device from the safety monitoring management device 10, the safety monitoring device 22B that provides the safety monitoring function 22 determines the generation timing. When the event (the safety event) matched with the safety condition is generated, the safety monitoring management device 10 outputs the instruction to stop the actuation of the target device to the servo driver 21B through the I/O device 31.

### <I. Advantage>

The following problems are assumed when the conventional safety system that only shuts off the power supply and the power source of the machine or the facility in generating of the safety event is considered. When a start-up sequence error is generated between the PLC that controls the target device and the PLC for the safety system, the determination that the safety event is generated is mistakenly made, and possibly the power supply and the power source are shut off. Therefore, the start-up sequence of the control PLC and the safety system PLC becomes complicated. There are also such adjustment difficulties that the control PLC differs from the safety system PLC in a unit of input and output numerical values, that design software for the control PLC is independent of design software for the safety system PLC, and that the timing is hardly adjusted between the control PLC and the safety system PLC. It is hard to adjust the timing, because the control PLC differs from the safety system PLC in a control period, or because an error of the control period is generated in the actual operation although synchronization is established on a simulation.

It is hard to solve the problems during the operation. This is because the safety device focuses on to become the safety state. Therefore, even if some sort of malfunction is generated, the phenomenon of the malfunction becomes a phenomenon on an "immobile" side, and the problem is hardly solved ex post facto. In the safety state, because the power supply is shut off, it is hard to check which event is generated.

As described above, in the embodiment, the field information and the like are logged, so that the current value managed by each device (the component) and the corresponding threshold (the setting value) can be checked in the retrospective manner while synchronized with each other. The factor for the stopping of the device finally determined to be the violation of the setting value can be checked ex post facto by referring to the log information.

According to the safety system of the embodiment, the logging can be kept by the simple trigger such as the generation (the issuance of the signal ensuring the safety such as the STO) of the safety event. The shutoff states of the power supply and the power source are safe in any safety system, so that the configuration of the embodiment can be applied to the plural safety systems while a common specification is maintained. Because the logging is automatically kept, a phenomenon having a low occurrence frequency can easily be logged. Here, necessity of an external measurement instrument is eliminated because the internal data of the device is recorded.

For example, the safety system in which the power supply is shut off every time a safety door used as an access door to the monitored facility is opened is used in the case that it is necessary to perform simple work of about 10 seconds many times in one hour at the monitored facility. In this case, a waiting time until the device is restarted since the power is turned on is relatively lengthened to possibly affect work efficiency. In such cases, a method for ensuring the stop state of the device using a safety motion function instead of shutting off the supplied power can be adopted. The calculated value during the calculation is maintained by introducing the safety motion function, so that sometimes a time loss caused by the restart can largely be reduced by such the operation that the movement instruction is continuously issued.

A method for discovering the control abnormality by the action monitoring is adopted in introducing the safety motion function. In the method, it is necessary that the adjustment be optimized between an actuation position (an actuation range) of the device and the range that the person (the worker) can enter while a balance is established between the productivity of the device and the safety of the worker. In this case, the safety system of the embodiment is preferably applied.

When the violation determination of the safety monitoring is made, any safety system (safety component) commonly performs the action to shut off the power supply and the power source. The data from each safety component is aggregated ex post facto by using the simple configuration in which the field information is stored in the timing of the transition to the safety state, the pieces of data are compared to each other based on the clock time (the timing of the transition to the safety state) at which the safety is ensured. Therefore, the margins of the operating state and the control state at the time when violation of the safety monitoring is determined can be checked and verified.

As described above, generally the "safety state" relies on the shutoff of the power supply and the power source, possibly all the machines and facilities including the monitoring system, in each of which the safety is not ensured, are shut off. Therefore, sometimes the data recorded in the control system is incorrectly left, and the data is hardly measured for the purpose of the adjustment in the conventional configuration. On the other hand, in the safety system of the embodiment, the measured data is left using the device that mainly performs the monitoring in which the safety state is ensured, so that how much the system operation becomes abnormal due to the emergency stop or the monitoring abnormality can be checked by the numerical value. Therefore, the data can be used in the ex-post improvement.

It is to be understood that the disclosed embodiment is illustrative and not restrictive in every aspect. It should be understood that the scope of the present invention is defined by the appended claims, and the meanings equivalent to the claims and all the changes that fall within the claims are included in the present invention.

## Claims

1. A control device (50,70) for constituting a safety system (1,1A,1B) that transfers a target device to a safety state when an event matched with a predetermined safety condition is generated, the control device (50,70) comprising:
a monitoring function (22,22A,22B) for continuously collecting information on the safety condition,
wherein, in response to generation of the event matched with the safety condition, the control device stores the information on the safety condition for a predetermined period based on generation timing of the event while correlating the generation timing with the collected information, and
the control device transmits to a management device (10) the stored information on the safety condition such that the management device (10) can aggregate the information with the generation timing as a reference.

2. A safety system (1,1A,1B) that causes a target device (5,9) to transition to a safety state when an event matched with a predetermined safety condition is generated, the safety system comprising:
a control device (50,70) according to claim 1.

3. The safety system (1,1A,1B) according to claim 2, wherein the monitoring function (22,22A,22B) determines whether the event matched with the safety condition is generated based on a signal related to actuation of the target device, and
when the event matched with the safety condition is generated, the monitoring function outputs a signal to stop the actuation of the target device (5,9) while notifying the management device (10) of the generation of the event matched with the safety condition.

4. The safety system (1,1A,1B) according to claim 2 or 3, wherein, when being notified by any one of a plurality of control devices (50,70) of the generation of the event matched with the safety condition, the management device (10) issues an instruction to other control devices to stop the actuation of the target device (5,9).

5. The safety system (1,1A,1B) according to any of claims 2 to 4, wherein the control device (50,70) further includes a device control function (21) of controlling the actuation of the target device (9), and
the monitoring function (22,22A,22B) issues the instruction to the device control function to stop the actuation of the target device while determining the generation timing in response to at least one of a determination that the event matched with the safety condition is generated and reception of the instruction to stop the actuation of the target device from the management device (10).

6. The safety system (1,1A,1B) according to any of claims 2 to 5, wherein the control device (50,70) includes an interface (12,13,14,15) with a device that controls the actuation of the target device, and
the monitoring function (22,22A,22B) issues the instruction to the device that controls the actuation of the target device (5,9) to stop the actuation of the target device while determining the generation timing in response to at least one of a determination that the event matched with the safety condition is generated and reception of the instruction to stop the actuation of the target device from the management device (10).

7. The safety system (1,1A,1B) according to any of claims 2 to 6, further comprising an output device that outputs a signal to a device that controls the actuation of the target device (5,9),
wherein the monitoring function (22,22A,22B) determines the generation timing in response to at least one of a determination that the event matched with the safety condition is generated and reception of the instruction to stop the actuation of the target device from the management device (10), and
the management device outputs the signal through the output device to the device that controls the actuation of the target device in order to stop the actuation of the target device when the event matched with the safety condition is generated.

8. The safety system (1,1A,1B) according to any of claims 2 to 7, wherein the information on the safety condition includes information indicating at least one of states including a normal state and a safety state.
